# EUROPEAN PATENT SPECIFICATION

(11) **EP 0 552 836 B1**
(45) Date of publication and mention of the grant of the patent: **12.07.1995**
(21) Application number: 93200114.2
(22) Date of filing: 18.01.1993
(51) Int. Cl.: B60P 1/46

(54) **Loading lift device for applying to the container of a truck**
Hubladeeinrichtung zur Anwendung an einem Lastwagenbehälter
Dispositif de hayon élévateur pour le conteneur d'un camion

(30) Priority: 22.01.1992 BE 9200071
(43) Date of publication of application: 28.07.1993
(73) Proprietor: NV NUYTS ORB, B-2360 Oud-Turnhout (BE)
(72) Inventor: Nuyts, Henry, B-2470 Retie (BE)
(74) Representative: Lips, Hendrik Jan George, Ir.

(56) References cited:
- EP-A- 0 416 701
- US-A- 3 877 590

## Description

The invention relates to a loading lift device for applying to the container of a truck such as in particular a removal van, which device comprises: a pair of substantially vertical columns, which take up a fixed position in relation to the container, slides which are movable along the columns, means for moving the slides along the columns, a platform assembly having at least one part pivotally connected to the slides, the axis of rotation of said portion running parallel to the plane of the columns and being square to the longitudinal direction thereof and means for rotating said portion in relation to the slides.

Such a device is known from EP-A-0 416 701. Therein it is desirable that, in the lowermost position of the slides, the supporting part of the platform assembly, on which the load to be moved is placed, bears on the ground. Further, certain parts of the platform have been mutually pivotally connected as well. Through this, it can be achieved that the supporting part of the assembly can be brought to the level of the roof of the container. On using the loading lift device, in particular with a removal, furniture and the like can easier be transported to and from the first floor.

The invention now seeks to further improve this device so that also in a simple construction of the platform assembly, its supporting part can be brought beyond the level of the roof of the container.

According to the invention this is achieved, because guiding elements have been provided, which can extend beyond the columns and have been directly or indirectly connected to the columns in such a way that when the truck is moving across the public highway, they can be brought into a position in which they protrude above the roof of the container in a small distance, or not at all and on using the device can be brought substantially in line with the columns and be held in this position for guiding the slides.

Therein, it can in particular be provided for, that the guiding elements have been pivotally connected to the roof of the container in such a way that, when they need not be used, they will lie on the roof of the container in an almost horizontal position.

Preferably, the pivot shafts between the guiding elements and the container will be located in line with each other and run parallel to the plane of the columns and be square to the columns.

It can also be provided for, that the guiding elements have been slidably connected to the columns, in such a way that, when they need not be used, they do not or only slightly protrude beyond the top ends of the columns.

According to an embodiment of the invention, the guiding elements are column elements, in such a way that in operating position, they are extension parts of the columns.

According to another development of the invention, the guiding elements can be holders which have been provided with one or more guiding rollers or guiding planes which in operating position are situated at a distance above the columns for guiding the slides above the top end of the columns.

In particular, it can be provided for that each guiding element has been coupled to a railing which can extend substantially along the edge of the roof of the container and which, when the guiding elements are out of use, is situated on the roof of the container in folded-down condition.

When the pivot shafts between the guiding elements and the container are in line with each other in the way described above, it can be provided for, that each guiding element has been coupled to the railing running almost horizontally, which extends in longitudinal direction of the container and has been pivotally connected to posts, the other ends of which being likewise pivotally connected to the roof of the container, in such a way that the pivot shafts of the posts run parallel to the pivot shafts of the guiding elements, in which the locking used for the guiding elements also serves for locking the railing in its brought-up position.

In this way, it can be achieved that on bringing the guiding elements into operation by pivoting them to the vertical position, at the same time the railing is brought up to a position at some distance from the roof, by pivoting of the posts connected therewith.

Through this, the safety of persons going on to the roof of the container is increased. This can be desirable when for example a ladder lift is situated on the roof, which must be used in transporting objects up and down.

To prevent the slides from being moved out of the guiding elements in upward direction, it can be provided for that at least one of the guiding elements is formed in such a way that a stop for the slide is obtained.

It is possible, that the pivot shafts of the guiding elements are situated at some distance from the end of the guiding elements, in such a way that, when the guiding elements are out of use, a portion of each guiding element will lie on the roof of the container and a portion will protrude behind the container to form a stop for the relevant slide so that it can not be brought up too far.

When the loading lift is out of use, the platform assembly is pivoted up against the rear wall of the container. For protection of the assembly and for closing the container, the upper rear wall will generally be provided with a roof plate protruding backwards, said plate being provided with a cover plate suspending near the free edge of said plate and in particular being made of rubber, while the roof plate will have been pivotally mounted to the rear edge so that it can pivot upwards.

Through this, it is possible that the roof plate pivots off on bringing the platform assembly to the highest position. At the same time, it is prevented that the foot of a person standing on the supporting part of the assembly gets stuck between this supporting part and the roof plate.

Therein it is also possible that at the side of the container, the supporting part of the platform assembly has been provided with a recession such that the supporting part can pass the cover plate in particular.

Therein, the floor of the container can be provided with a pivotable flap connected therewith for bridging said recession when the platform assembly is situated at the level of the loading floor.

Through this, it is also achieved, that there is less danger of the foot of a person standing on the supporting part of the assembly gets stuck between the supporting part and a part of the floor of the container.

In order to bring the platform assembly to the highest possible position, it can be provided for, that the lifting system for the assembly is connected to the lowest possible point of the slides.

The invention is further explained by way of embodiments, illustrated in the drawing, in which:
fig. 1 shows a side view of the rearmost part of a truck with loading lift device mounted thereto, the platform assembly thereof being shown in two positions and the guiding elements and the railings coupled therewith being out of use;
fig. 2 shows a side view corresponding to fig. 1 with the guiding elements and the railings in operating position;
fig. 3 shows a side view corresponding to fig. 1, but with a modified embodiment of the guiding elements and that in various positions;
fig. 4 shows a side view corresponding to fig. 3 with the guiding elements in the operating position and a platform assembly being near it;
fig. 5 shows a side view corresponding to fig. 4, but with a modified embodiment of the platform assembly;
fig. 6 shows a plan view of the platform assembly with a part of the container roof;
fig. 7 shows a detail of fig. 1 on an enlarged scale with the guiding elements in the folded-down position on the roof of the container, with the platform assembly in collapsed position and with a roof plate extending from the upper rear edge of the container;
fig. 8 shows a detail corresponding to fig. 7, but with the guiding elements and the platform assembly in operating condition; and
fig. 9 shows a detail of the rear edge of the loading floor of the container with a part of the platform assembly.

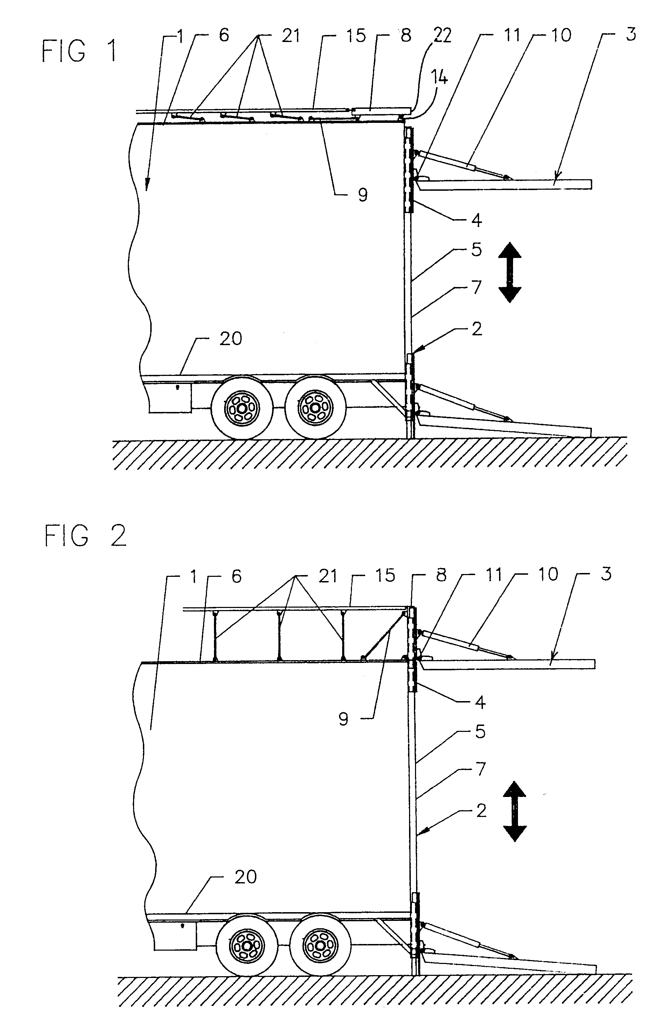

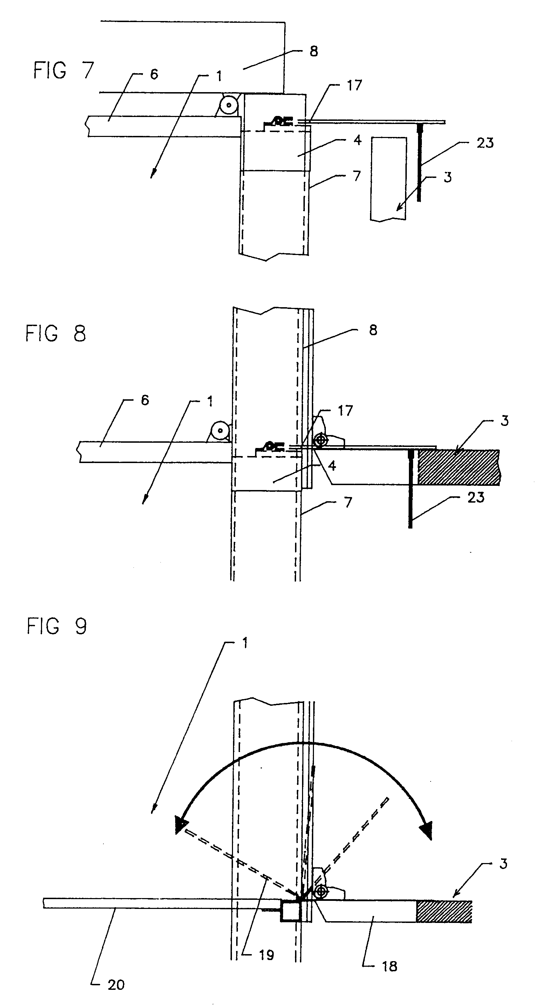

Fig. 1 shows a part of a container 1 of a truck with a loading lift device 2 mounted at the container opening 5 on the back wall of the truck. The loading lift device comprises the columns 7, along which the slides 4 are movable, with which columns the platform assembly 3 has been rotatably connected by means of the hinges 11. In the embodiment according to the figures 1 to 4, the platform assembly 3 serves directly for receiving the load to be brought up or down. The assembly 3 can be brought into the desired position by means of the hydraulic or pneumatic cylinder 10. This can be the operating condition shown in the figures 1 to 4, or the folded-up position as partly shown in fig. 7.

The figs. 1 and 2 show an embodiment in which column elements 8 are used, which have been rotatably connected to the roof 6 of the container 1 in the pivot points 14. The column elements 8 correspond in shape to the columns 7 and connect to the upper ends thereof. A column element 8 can be locked in the vertical position by means of a supporting element 9, as indicated in fig. 2. The lower ends of posts 21 have also been pivotally connected to the roof 6, while the upper ends thereof have been pivotally connected to the railing 15, the outer end of which having been pivotally connected to the upper end of the column element 8.

As appears in particular from fig. 2, on pivoting the column elements 8 up, the railings 15 are brought to the operating position by pivoting the posts 21 up.

After pivoting the column elements 8 upwards, the slides 4 can be brought up further than would be the case if these elements 8 would not be present. After pivoting the column elements 8 and the railing 15 downwards, the total height of the truck is only a little greater than when these parts are lacking.

As shown in fig. 1, the lower end 22 of a column element 8 can serve as stop for the slide 4 when the loading lift is in use, but the column elements are not.

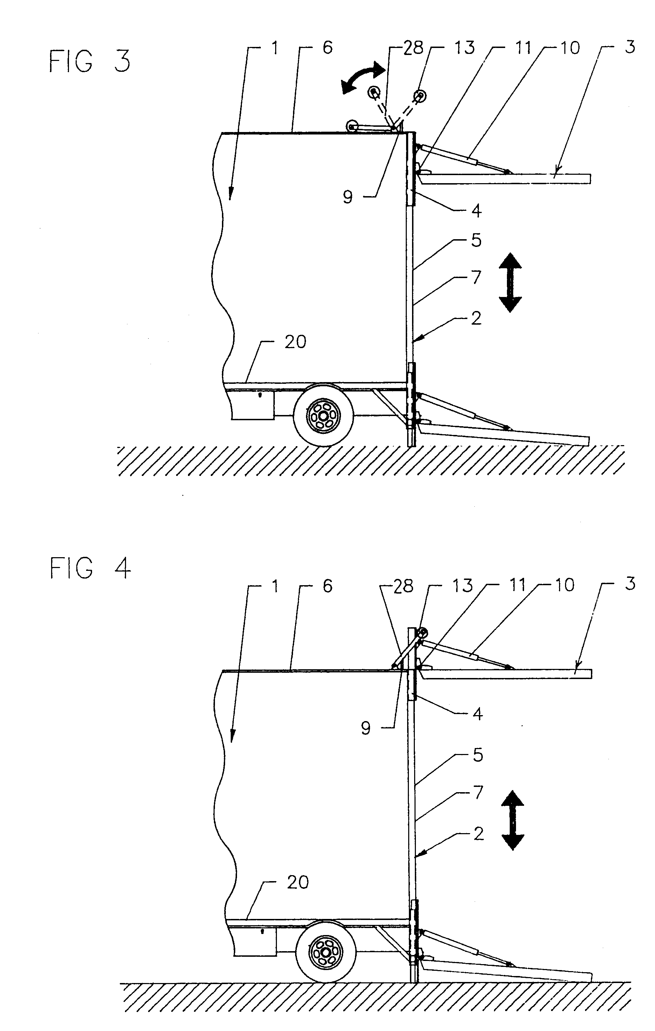

The figures 3 to 5 show an embodiment in which the guiding elements are formed by holders 28, which have been provided with guiding rollers 13, or guiding planes. The guiding rollers serve, in a similar way as the column elements 8, for guiding the slides 4 when they are moved to their uppermost positions. In the figures 3 and 4 the slides 4 with the platform assembly 3 have been shown in two different positions.

Fig. 3 shows in solid lines the holders 28 in folded-down position on the roof 6 of the container 1. In dash lines, the holders 28 have been shown in the operative position and during pivoting to it. In figure 4, the holders have been shown in the operative position, in which its rollers 13 serve for guiding the slides 4.

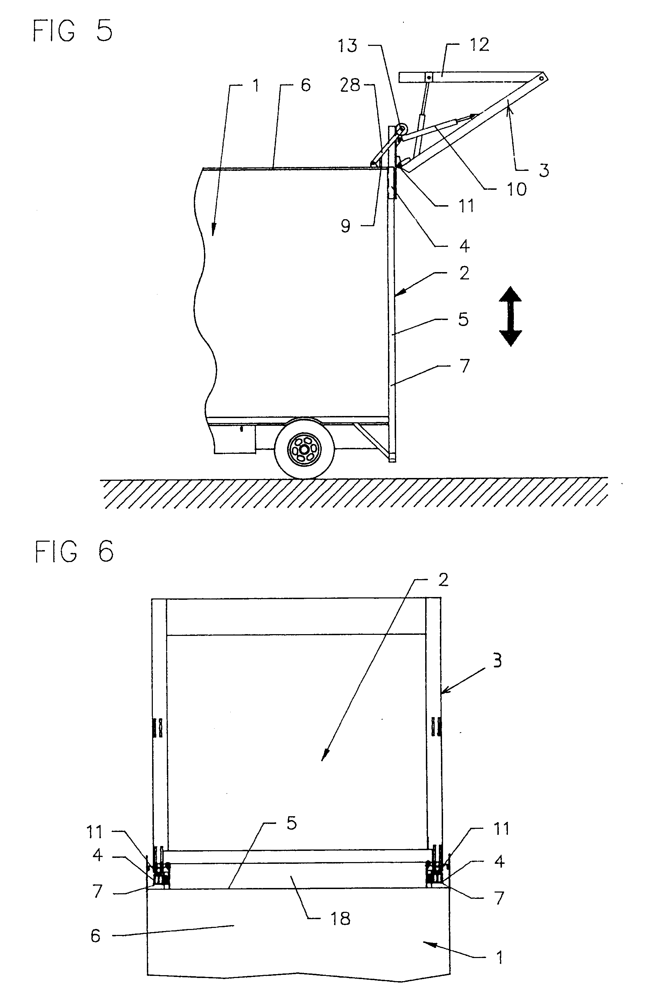

Fig. 5 shows another embodiment of the platform assembly 3. Through this, it is achieved that its part 12, which serves for carrying the load, can be brought up even higher above the roof 6 of the container 1. A similar embodiment has already been described in above-mentioned EP-A-0 416 701 and therefore need not be explained further.

Fig. 6 shows a plan view of a device according to the invention in which the platform assembly 3 has been provided with a recession 18 at the side of the container 1. As appears from the figures 7 and 8, as a result of this, at the upper edge the container 1 can be provided with a roof plate 17 protruding backwards and a cover plate 23, which can have the form of a rubber sheet, suspending from the roof plate near the free end of it. The roof plate 17 can be pivotally connected to the rear edge. Due to this, it is possible that this roof plate is pivoted away when this is desirable on using the slides 4 with the platform assembly 3.

When the platform assembly 3 is at the level of the loading floor 20 of the container 1, the recession 18 can be bridged by a flap 19 pivotally connected to the loading floor 20, as shown in fig. 9.

It will be obvious that means known per se can be employed for bringing the slides 4 up and down along the columns 7, and possibly along the column elements 8, or the rollers 13 of the holders 28. This means can consist of cables, for example. From a slide 4, each cable runs upwards and over a guiding roller, which is located near the roof 6 of the container 1. At the other end, the cable is connected to a winding roller, which is driven by an electric motor, for example. The cable has been connected to the slide at a lowest possible point thereof, so that the platform assembly can be brought to the highest possible position also when the guiding rollers are not located above the roof of the container.

## Claims

1. Loading lift device for applying to the container (1) of a truck such as in particular a removal van, which device comprises: a pair of substantially vertical columns (7), which take up a fixed position in relation to the container (1), slides (4) which are movable along the columns, means for moving the slides (4) along the columns (7), a platform assembly (3) having at least one part pivotally connected to the slides (4), the axis of rotation of said portion running parallel to the plane of the columns (7) and being square to the longitudinal direction thereof and means (10) for rotating said portion in relation to the slides, characterized in that guiding elements (8, 28) have been provided, which can extend beyond the columns (7) and have been directly or indirectly connected to the columns (7) in such a way that when the truck is driving across the public highway, they can be brought into a position in which they protrude above the roof (6) of the container (1) in a small distance, or not at all and on using the device can be brought substantially in line with the columns (7) and be held in this position for guiding the slides (4).

2. Loading lift device according to claim 1, characterized in that the guiding elements (8, 28) have been pivotally connected to the roof (6) of the container (1) in such a way that, when they need not be used, they will lie on the roof (6) of the container (1) in an almost horizontal position.

3. Loading lift device according to claim 2, characterized in that the pivot shafts between the guiding elements (8, 28) and the container (1) are in line with each other and run parallel to the plane of the columns (7) and are square to the columns.

4. Loading lift device according to claim 1, characterized in that the guiding elements have been slidably connected to the columns (7), in such a way that, when they need not be used, they do not or only slightly protrude beyond the top ends of the columns (7).

5. Loading lift device according to one of the preceding claims, characterized in that the guiding elements are column elements (8), such that in operating position they are extension elements of the columns (7).

6. Loading lift device according to one of the claims 1 - 4, characterized in that the guiding elements are holders (28) which have been provided with one or more guiding rollers (13) or guiding planes which in operating position are situated at a distance above the columns (7) for guiding the slides (4) above the top end of the columns (7).

7. Loading lift device according to one of the preceding claims, characterized in that each guiding element (8, 28) has been coupled to a railing (15) which can extend substantially along the edge of the roof (6) of the container (1) and which, when the guiding elements (8, 28) are out of use, is situated on the roof (6) of the container in folded-down condition.

8. Loading lift device according to the claims 3 or 6 and 7, characterized in that each guiding element (8, 28) has been coupled to the railing (15) running almost horizontally, which extends in longitudinal direction of the container (1) and has been pivotally connected to posts (21), the other ends of which being likewise pivotally connected to the roof (6) of the container (1), in such a way that the pivot shafts of the posts run parallel to the pivot shafts (14) of the guiding elements (8, 28), and in which the locking (9) used for the guidings elements (8, 28) also serves for locking the railing (15) in its brought-up position.

9. Loading lift device according to one of the preceding claims, characterized in that at least one of the guiding elements (8, 28) is formed in such a way that a stop (22) for the slide (4) is obtained.

10. Loading lift device according to claim 9, characterized in that the pivot shafts (14) of the guiding elements (8, 28) are situated at some distance from the end (22) of the guiding elements, in such a way that, when the guiding elements are out of use, a portion of each guiding element (8, 28) will lie on the roof (6) of the container (1) and another portion (22) will protrude behind the container (1) to form a stop for the relevant slide (4) so that it can not be brought up too far.

11. Loading lift device according to one of the preceding claims, characterized in that the upper rear edge of the container (1) has been provided with a roof plate (17) protruding backwards, said plate being provided with a cover plate (23) suspending near the free end of the roof plate, the roof plate (17) being pivotally connected to the rear edge, in such a way that it can pivot upwards.

12. Loading lift device according to claim 11, characterized in that at the side of the container (1), the supporting part of the platform assembly (3) has been provided with a recession (18) such that the supporting part can pass the cover plate (23).

13. Loading lift device according to claim 12, characterized in that the floor (20) of the container (1) can be provided with a pivotable flap (19) connected therewith for bridging said recession (18) when the platform assembly (3) is situated at the level of the loading floor (20).

14. Loading lift device according to one of the preceding claims, characterized in that the lifting system for the platform assembly (3) is connected to the lowest point of the slides (4).

## Patentansprüche

1. Hubladeeinrichtung zur Anwendung beim Lade-Behälter (1) eines Lastkraftwagens, insbesondere eines Umzugskraftwagens, welche Einrichtung umfaßt: zwei im wesentlichen lotrechte Säulen (7), die in bezug auf den Behälter (1) eine feste Position einnehmen, längs der Säulen verschiebbare Gleitstücke (4), Mittel zum verschieben der Gleitstücke (4) längs der Säulen (7), eine Hebebühnenanordnung (3) mit mindestens einem mit den Gleitstücken (4) schwenkbar verbundenen Teil, wobei die Drehachse des Abschnitts (Teils) parallel zur Ebene der Säulen (7) verläuft und rechtwinklig zu ihrer Längsrichtung liegt, und Mittel (10) zum Drehen des Abschnitts (Teils) relativ zu den Gleitstücken, dadurch gekennzeichnet, daß Führungselemente (8, 28) vorgesehen sind, die sich über die Säulen (7) hinaus erstrecken können und die mit den Säulen (7) unmittelbar oder mittelbar so verbunden sind, daß sie dann, wenn der Lastkraftwagen die öffentliche (Schnell-)Straße befährt, in eine Stellung bringbar sind, in welcher sie mit einem kleinen Abstand oder überhaupt nicht nach oben über das Dach (6) des Behälters (1) hinausragen, und bei Benutzung der Einrichtung praktisch in eine Linie mit den Säulen (7) gebracht und zum Führen der Gleitstücke (4) in dieser Stellung gehalten werden können.

2. Hubladeeinrichtung nach Abspruch 1, dadurch gekennzeichnet, daß die Führungselemente (8, 28) mit dem Dach (6) des Behälters (1) derart schwenkbar verbunden sind, daß sie dann, wenn sie nicht benötigt werden, in einer nahezu waagerechten Lage auf dem Dach (6) des Behälters (1) (auf)liegen.

3. Hubladeeinrichtung nach Anspruch 2, dadurch gekennzeichnet, daß die Schwenkachsen zwischen den Führungselementen (8, 28) und dem Behälter (1) in einer Linie miteinander liegen, parallel zur Ebene der Säulen (7) verlaufen und rechtwinkelig zu den Säulen liegen.

4. Hubladeeinrichtung nach Anspruch 1, dadurch gekennzeichnet, daß die Führungselemente mit den Säulen (7) derart verschiebbar verbunden sind, daß sie dann, wenn sie nicht benötigt werden, nicht oder nur geringfügig über die oberen Enden der Säulen (7) hinausragen.

5. Hubladeeinrichtung nach einem der vorangehenden Ansprüche, dadurch gekennzeichnet, daß die Führungselemente Säulenelemente (8) sind, derart, daß sie in der Betriebsstellung Verlängerungselemente der Säulen (7) bilden.

6. Hubladeeinrichtung nach einem der Ansprüche 1 bis 4, dadurch gekennzeichnet, daß die Führungselemente Halter (28) sind, die mit einer oder mehreren Führungsrollen (13) oder Führungsflächen versehen sind, welche in der Betriebsstellung in einem Abstand über den Säulen (7) angeordnet sind, um die Gleitstücke (4) oberhalb des oberen Endes der Säulen (7) zu führen.

7. Hubladeeinrichtung nach einem der vorangehenden Ansprüche, dadurch gekennzeichnet, daß jedes Führungselement (8, 28) mit einer Reling (15) gekoppelt ist, die sich praktisch längs des Rands des Daches (6) des Behälters (1) erstrecken kann und die, wenn die Führungselemente (8, 28) nicht benutzt werden, in einem herabgeklappten Zustand auf dem Dach (6) des Behälters angeordnet ist.

8. Hubladeeinrichtung nach den Ansprüchen 3 oder 6 und 7, dadurch gekennzeichnet, daß jedes Führungselement (8, 28) mit der nahezu waagerecht verlaufenden Reling (15) gekoppelt ist, die in der Längsrichtung des Behälters (1) verläuft und schwenkbar mit Pfosten (21) verbunden ist, deren andere Enden ihrerseits mit dem Dach (6) des Behälters (1) schwenkbar verbunden sind, derart, daß die Schwenkachsen der Pfosten parallel zu den Schwenkachsen (14) der Führungselemente (8, 28) verlaufen, und wobei die für die Führungselemente (8, 28) benutzte Verriegelung (9) auch zum Verriegeln der Reling (15) in ihrer aufgestellten Stellung dient.

9. Hubladeeinrichtung nach einem der vorangehenden Ansprüche, dadurch gekennzeichnet, daß mindestens eines der Führungselemente (8, 28) so ausgebildet ist, daß ein Anschlag (22) für das Gleitstück (4) erhalten (geformt) ist.

10. Hubladeeinrichtung nach Anspruch 9, dadurch gekennzeichnet, daß die Schwenkachsen (14) der Führungselemente (8, 28) in einigem Abstand vom Ende (22) der Führungselemente angeordnet sind, derart, daß bei unbenutzten Führungselementen ein Abschnitt eines jeden Führungselements (8, 28) auf dem Dach (6) des Behälters (1) (auf)liegt und ein anderer Abschnitt (22) hinter den Behälter (1) hinaus vorsteht und einen Anschlag für das betreffende Gleitstück (4) bildet, so daß dieses nicht zu weit aufwärts verbringbar ist.

11. Hubladeeinrichtung nach einem der vorangehenden Ansprüche, dadurch gekennzeichnet, daß die obere Hinterkante des Behälters (1) mit einer rückwärts vorstehenden Dachplatte (17) versehen ist, die (ihrerseits) mit einer in der Nähe des freien Endes der Dachplatte herabhängenden Deckplatte (23) versehen ist, wobei die Dachplatte (17) derart mit der Hinterkante verbunden ist, daß sie nach oben schwenken kann.

12. Hubladeeinrichtung nach Anspruch 11, dadurch gekennzeichnet, daß an der Seite des Behälters (1) das Tragteil der Hebebühnenanordnung (3) mit einer Aussparung (18) so versehen ist, daß das Tragteil die Deckplatte (23) passieren kann.

13. Hubladeeinrichtung nach Anspruch 12, dadurch gekennzeichnet, daß der (Lade-)Boden (20) des Behälters (1) mit einer damit verbundenen, schwenkbaren Klappe (19) zum Überbrücken der Aussparung (18), wenn sich die Hebebühnenanordnung (3) in der Höhe des Ladebodens (20) befindet, versehen sein kann.

14. Hubladeeinrichtung nach einem der vorangehenden Ansprüche, dadurch gekennzeichnet, daß das Hubsystem für die Hebebühnenanordnung (3) mit dem tiefsten Punkt der Gleitstücke (4) verbunden ist.

## Revendications

1. Dispositif élévateur de charge destiné à être installé sur le conteneur d'un camion tel qu'en particulier un camion de déménagement, lequel dispositif comprend : une paire de colonnes (7) sensiblement verticales, des glissières (4) qui peuvent être déplacées le long des colonnes (7), des moyens pour déplacer les glissières le long des colonnes, un ensemble formant plate-forme (3) ayant au moins une partie reliée à pivotement aux glissières, l'axe de rotation de ladite partie s'étendant parallèlement au plan des colonnes (7) et étant perpendiculaire à la direction longitudinale de celui-ci, et des moyens (10) pour entraîner en rotation ladite partie relativement aux glissières, caractérisé en ce qu'on prévoit des éléments de guidage (8, 28) qui peuvent s'étendre au-delà des colonnes (7) et sont directement ou indirectement reliés aux colonnes (7) de telle sorte que, lorsque le camion roule sur une voie publique, ils puissent être placés dans une position dans laquelle ils font saillie au-dessus du toit (6) du conteneur (1) à une distance faible, ou non, et en fonctionnement, le dispositif peut être placé sensiblement dans l'alignement des colonnes (7) et être maintenu dans cette position pour guider les glissières (4).

2. Dispositif élévateur de charge selon la revendication 1, caractérisé en ce que les éléments de guidage (8, 28) sont reliés à pivotement au toit (6) du conteneur (1) de telle sorte que, lorsqu'ils n'ont pas besoin d'être utilisés, ils reposent sur le toit (6) du conteneur (1) dans une position quasiment horizontale.

3. Dispositif élévateur de charge selon la revendication 2, caractérisé en ce que les arbres de pivotement entre les éléments de guidage (8, 28) et le conteneur (1) sont alignés l'un par rapport à l'autre et s'étendent parallèlement au plan des colonnes (7) et perpendiculairement aux colonnes (7).

4. Dispositif élévateur de charge selon la revendication 1, caractérisé en ce que les éléments de guidage sont reliés à glissement aux colonnes (7), de telle sorte que, lorsqu'ils n'ont pas besoin d'être utilisés, ils ne font pas saillie, ou seulement légèrement, au-delà des extrémités des colonnes (7).

5. Dispositif élévateur de charge selon l'une des revendications précédentes, caractérisé en ce que les éléments de guidage sont des éléments de colonne (8), tels qu'en position de fonctionnement ils constituent des éléments prolongateurs des colonnes (7).

6. Dispositif élévateur de charge selon l'une des revendications 1 à 4, caractérisé en ce que les éléments de guidage sont des supports (28) qui sont pourvus d'un ou plusieurs galets de guidage (13), ou de plans de guidage, qui en position de fonctionnement sont situés à distance au-dessus des extrémités supérieures des colonnes (7).

7. Dispositif élévateur de charge selon l'une des revendications précédentes, caractérisé en ce que chaque élément de guidage (8, 28) est couplé à une rampe (15) qui peut s'étendre sensiblement le long du bord du toit (6) du conteneur (1), et qui, lorsque les éléments de guidage (8, 28) sont hors fonctionnement, est située en position rabattue sur le toit (6) du conteneur (1).

8. Dispositif élévateur de charge selon les revendications 3 ou 6 et 7, caractérisé en ce que chaque élément de guidage (8, 28) est couplé à la rampe qui se situe sensiblement horizontalement, laquelle s'étend selon la direction longitudinale du conteneur (1) et est reliée à pivotement à des montants (21), les autres extrémités de ceux-ci étant de même reliées à pivotement au toit (6) du conteneur (1), de telle sorte que les arbres de pivotement des montants s'étendent parallèlement aux arbres de pivotement (14) des éléments de guidage (8, 28), et dans lequel le verrouillage utilisé pour les éléments de guidage (8, 28) sert également pour verrouiller la rampe (15) dans sa position relevée.

9. Dispositif élévateur de charge selon l'une des revendications précédentes, caractérisé en ce qu'au moins l'un des éléments de guidage (8, 28) est réalisé de telle sorte qu'il forme une butée (22) pour la glissière (4).

10. Dispositif élévateur de charge selon la revendication 9, caractérisé en ce que les arbres de pivotement (14) des éléments de guidage (8, 28) sont situés à quelque distance de l'extrémité (22) des éléments de guidage, de telle sorte que, lorsque les éléments de guidage sont hors de fonctionnement, une partie de chaque élément de guidage (8, 28) repose sur le toit (6) du conteneur (1) et une autre partie (22) fait saillie vers l'arrière du conteneur (1) pour réaliser une butée pour la glissière concernée afin qu'elle ne puisse pas être élevée trop loin.

11. Dispositif élévateur de charge selon l'une des revendications précédentes, caractérisé en ce que le bord supérieur arrière du conteneur (1) est pourvu d'une plaque de couverture (17) faisant saillie vers l'arrière, ladite plaque de couverture étant équipée d'une plaque de fermeture (23) suspendue près de l'extrémité libre de la plate-forme, la plaque de couverture (17) étant reliée à pivotement au bord arrière, de telle sorte qu'elle puisse pivoter vers le haut.

12. Dispositif élévateur de charge selon la revendication 11, caractérisé en ce que sur le côté du conteneur (1), la partie formant support de l'ensemble formant plate-forme (3) est pourvue d'un évidement (18) tel que la partie formant support puisse dépasser la plaque de fermeture (23).

13. Dispositif élévateur de charge selon la revendication 12, caractérisé en ce que le plancher (20) du conteneur (1) peut être pourvu d'un volet pivotant (19) relié à celui-ci et propre à combler ledit évidement lorsque l'ensemble formant plate-forme (3) est disposé au niveau du plancher de chargement (20).

14. Dispositif élévateur de charge selon l'une des revendications précédentes, caractérisé en ce que le dispositif élévateur de l'ensemble formant plate-forme (3) est relié au point le plus bas des glissières (4).
